# FASCICULE DE BREVET EUROPEEN

(11) **EP 1 357 459 B1**
(45) Date de publication et mention de la délivrance du brevet: **29.10.2008**
(21) Numéro de dépôt: 03354039.4
(22) Date de dépôt: 23.04.2003
(51) Int. Cl.: G06F 21/00

(54) **Processeur securisé contre les deroutements**
Gegen Umleitung gesicherter Prozessor
Processor secured against diversion

(30) Priorité: 23.04.2002 FR 0205069
(43) Date de publication de la demande: 29.10.2003
(73) Titulaire: STMicroelectronics S.A., 92120 Montrouge (FR)
(72) Inventeur: Teglia, Yannick, 13011 Marseille (FR)
(74) Mandataire: de Beaumont, Michel

(56) Documents cités:
- WO-A-00/54155
- WO-A-01/97010
- US-A- 4 251 885
- US-A- 4 493 078
- US-A- 4 513 174
- US-A- 4 920 538

## Description

La présente invention concerne le domaine des processeurs exécutant des séries d'instructions ou codes opératoires sur des données.

L'invention concerne plus particulièrement un processeur utilisé pour l'exécution d'un processus d'authentification, d'autorisation ou analogue. Plus généralement, l'invention s'applique à tout programme pour lequel on souhaite garantir que l'exécution (séquencement) du programme (série d'instructions) ne soit pas modifiée.

Dans ce genre d'application, un moment critique est lorsque le processeur doit décider si une opération particulière est autorisée. Dans un exemple d'application à des cartes bancaires, il s'agit, par exemple, de l'authentification de l'utilisateur grâce au code saisi, afin d'autoriser une transaction bancaire.

Pour autoriser ou non l'accès à une procédure sécurisée, on teste la véracité d'une condition. Suivant le résultat du test, on autorise l'accès à la partie ultérieure du processus.

Une faiblesse de tels processus est liée au risque de déroutement du programme, c'est-à-dire de forcer le programme à sauter une ou plusieurs instructions. Un tel déroutement peut être effectué, par exemple, en envoyant un pic de courant temporaire sur l'alimentation du processeur pendant un court instant (connu par son appellation anglo-saxonne "glitch"). Un déroutement peut être frauduleux ou accidentel. Les tentatives de déroutements frauduleux apparaissent le plus souvent lorsque le programme s'est mis en boucle ou est arrêté sur une instruction de blocage, suite à un défaut d'authentification.

Qu'il ait une cause accidentelle ou intentionnelle, un déroutement d'un programme exécuté par un processeur est particulièrement gênant lorsqu'il s'agit d'une application sécuritaire.

Le séquencement des instructions est généralement obtenu au moyen d'un compteur d'instructions (appelé compteur programme) associé au processeur d'exécution du programme.. Classiquement, pour détecter une tentative de déroutement, on double le compteur programme synchronisant le fonctionnement du processeur. En prévoyant deux compteurs programmes ayant des réalisations différentes et dont les sorties respectives subissent un test câblé de cohérence avant de déclencher l'instruction suivante à exécuter par le processeur, on peut éviter certains déroutements. En effet, lors d'une attaque par impulsion de courant, connue également sous le nom d'injection de fautes, il y a de grandes chances que les résultats donnés par les deux compteurs programmes soient différents.

Un inconvénient de cette solution est qu'elle est complexe à mettre en oeuvre.

Le document US 4 493 078 décrit un système pour tester un ordinateur dans lequel un registre à décalage est utilisé pour modifier un état initial en un état final.

La présente invention vise à proposer une autre solution pour contrôler l'exécution d'instructions d'un programme exécuté par un processeur..

L'invention vise plus particulièrement à détecter un branchement incohérent dans l'exécution d'un programme.

L'invention vise également à proposer une solution qui ne requiert pas de prévoir deux compteurs programmes distincts.

Pour atteindre ces objets et d'autres, la présente invention prévoit un procédé de contrôle de l'exécution d'un programme selon la revendication 1.

Selon un mode de mise en oeuvre de la présente invention, les codes initiaux et finaux des opérateurs sont stockés dans une mémoire non volatile à lecture seulement.

Selon un mode de mise en oeuvre de la présente invention, à chaque exécution d'une instruction du programme, le procédé consiste :
à lire le code initial associé à l'opérateur de l'instruction dans ladite mémoire ;
à stocker ce code initial dans ledit registre ;
à appliquer ladite fonction de dégradation au contenu dudit registre un nombre de fois fonction du type d'instruction ; et
en fin d'instruction :
   à lire le code final associé à l'opérateur de l'instruction dans ladite mémoire ; et
   à vérifier la cohérence entre le contenu du registre et ce code final.

Selon un mode de mise en oeuvre de la présente invention, le nombre d'applications de la fonction de dégradation dépend du nombre de cycles temporels nécessaires à l'exécution de l'instruction.

Selon un mode de mise en oeuvre de la présente invention, le nombre d'applications de la fonction de dégradation dépend du nombre de changement d'états d'un automate d'états lors de l'exécution de l'instruction.

Selon un mode de mise en oeuvre de la présente invention, la fonction de dégradation est choisie pour que chaque état soit séparé de l'état suivant par une distance de Hamming.

Selon un mode de mise en oeuvre de la présente invention, la détection d'un code courant contenu dans le registre, différent d'une clé initiale ou finale, provoque un traitement d'anomalie spécifique.

L'invention prévoit également un processeur d'exécution d'un programme, associé à un registre de stockage d'une clé binaire courante de contrôle de l'exécution du programme selon la revendication 8.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 illustre le contenu d'une mémoire de stockage de clés initiales et finales associées à chaque opérateur selon un mode de réalisation du procédé de sécurisation contre les déroutements d'un programme selon la présente invention ;
la figure 2 illustre des caractéristiques d'un programme du type auquel s'applique l'invention ;
la figure 3 illustre l'exécution d'une instruction d'un programme selon un mode de réalisation de la présente invention ; et
la figure 4 est un diagramme d'états illustrant un mode de mise en oeuvre de la présente invention.

Les mêmes éléments ont été désignés par les mêmes références aux différentes figures. Pour des raisons de clarté, seuls les éléments et étapes qui sont nécessaires à la compréhension de l'invention ont été représentés aux figures et seront décrits par la suite. En particulier, les opérateurs concernés par la mise en oeuvre de l'invention n'ont pas été détaillés, l'invention s'appliquant quel que soit le type d'opérateurs. De plus, tous les constituants nécessaires à l'exécution d'un programme, que ce soit au moyen d'une mise en oeuvre logicielle ou au moyen d'une machine d'états en logique câblée, n'ont été détaillés, leur réalisation faisant appel à des éléments classiques.

Une caractéristique de la présente invention est d'associer, à chaque opérateur d'instruction d'un programme à exécuter au moyen d'un processeur, deux clés ou mots binaires qui sont liés l'un à l'autre par une fonction, dite de dégradation, dépendant de l'exécution de cette instruction. Une première clé correspond à une clé dite initiale. La deuxième clé correspond à une clé dite finale, c'est-à-dire au résultat atteint par la fonction de dégradation à la fin de l'instruction concernée.

On distingue ici l'instruction de l'opérateur, en ce sens qu'une instruction comprend un opérateur et, le plus souvent, des opérandes. De façon parfaitement connue, un compteur d'instructions ou compteur programme séquence le déroulement du programme, chaque instruction nécessitant un nombre de cycles qui dépend de l'opérateur et du nombre d'opérandes qui y sont associés. Par ailleurs, au cours de l'exécution du programme, un automate d'états prend des états successifs selon les opérandes et résultats. Le nombre d'états pris par l'automate pendant une instruction peut être différent du nombre de cycles d'instruction. Selon l'invention, on applique la fonction de dégradation soit sur une base temporelle, au rythme des cycles d'instruction ou des cycles d'horloge, soit sur une base spatiale au rythme des changements d'états de l'automate d'états.

Une autre caractéristique de l'invention est d'utiliser un mot binaire unique représentant la clé courante subissant la fonction de dégradation au fur et à mesure de l'exécution du programme. En d'autres termes, on utilise un registre de stockage d'une clé binaire dont la valeur change, par exemple à chaque cycle du compteur programme, et dont certains états sont connus et prédéterminés. Il s'agit des états initiaux et finaux des clés associées à chaque opérateur utilisé par le programme.

Le rôle de la fonction de dégradation est de modifier la valeur contenue dans le registre de clé, depuis la clé initiale de l'opérateur, sachant qu'au bout du nombre d'applications attaché à cet opérateur, le registre doit contenir la clé finale. Ceci vaut dans le cadre d'un fonctionnement normal, c'est-à-dire sans tentative de déroutement accidentel ou volontaire.

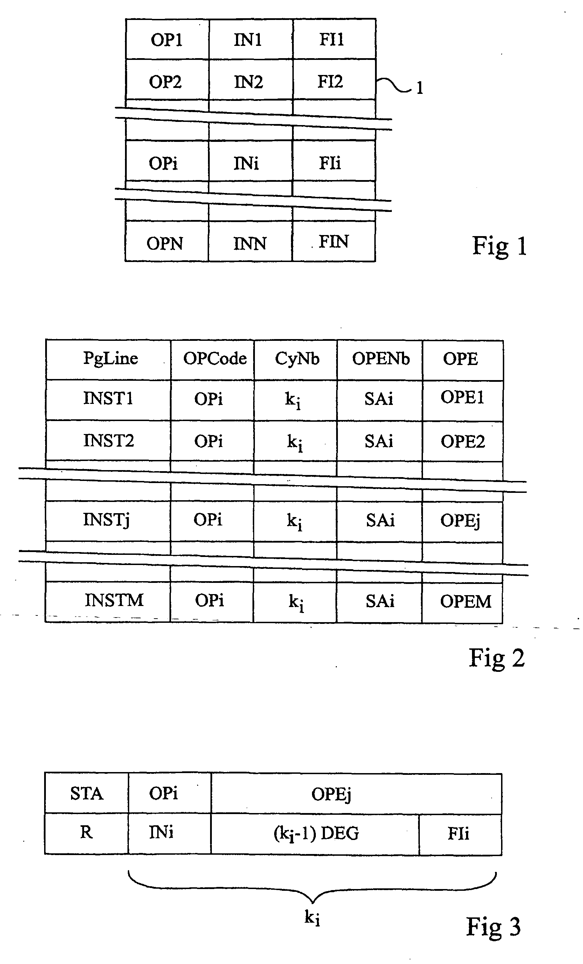

La figure 1 illustre, de façon très schématique, la structure d'une mémoire 1, ou d'une zone d'une mémoire à lecture seule (ROM), de stockage des clés initiales et finales associées, selon l'invention, aux différents types d'opérateurs utilisés dans un programme.

On mémorise une table dans laquelle, à chaque opérateur OPi (i compris entre 1 et N, où N représente le nombre de types d'opérateurs possibles dans le programme), sont associées une valeur initiale INi et une valeur finale FIi de la clé caractéristique de l'invention. La taille des mots stockés dans la mémoire 1 dépend du nombre N de types d'opérateurs susceptibles d'être utilisés dans le programme, ainsi que du nombre maximal (en variante, moyen) d'états intermédiaires pris par la clé, par application de la fonction de dégradation, au cours d'une instruction.

La figure 2 illustre, sous la forme d'un tableau, les caractéristiques d'un programme et, plus précisément, des instructions d'un programme qui sont utiles pour la mise en oeuvre de l'invention.

Le programme comprend M lignes d'instructions INSTj (j compris entre 1 et M). Chaque ligne PgLine est identifiée par l'opérateur (OPCode) OPi de l'instruction et l'ensemble d'opérandes (OPE) OPEj utilisés par l'opérateur. On a désigné les opérateurs par l'index i (compris entre 1 et N) car deux lignes différentes du programme peuvent faire appel à un même opérateur avec un ensemble d'opérandes différent (par exemple, le chargement ou la lecture d'une donnée à une adresse en fonction de l'opérande associé à l'opérateur). Chaque opérateur OPi a pour caractéristiques (outre les clés initiale INi et finale FIi propres à l'invention) un nombre kᵢ de cycles d'instruction (CyNb) ou de cycles d'horloge, un nombre d'états de l'automate d'états (non représenté) et un nombre SAi d'opérandes (OPENb). En figure 2, on suppose une mise en oeuvre de l'invention sur le nombre de cycles du compteur programme, c'est pourquoi le nombre d'états de l'automate d'états n'est pas pris en compte.

La figure 3 illustre, par les contenus successifs de l'automate d'état STA et d'un registre R de clé caractéristique de l'invention, l'exécution d'une instruction INSTj d'un programme selon un mode de mise en oeuvre de l'invention.

L'automate d'état STA contient successivement l'opérateur OPi, puis les états des opérandes de l'ensemble OPEj de l'instruction INSTj. Lors du chargement de l'opérateur OPi dans l'automate STA, la clé INi correspondante est extraite de la table 1 (figure 1) et est chargée dans le registre R en valeur d'initialisation.

En prenant pour exemple une dégradation de la clé du registre R à chaque cycle du compteur d'instruction, la clé subit kᵢ-1 fois la fonction de dégradation DEG (qui est la même quel que soit l'opérateur). A l'issue de la kᵢ-1ème dégradation, la valeur contenue dans le registre R est, en l'absence de déroutement, FIi.

Dans le cas (non représenté) où la fonction de dégradation est appliquée sur la base des changements d'états de l'automate STA, elle est appliquée un nombre de fois correspondant au nombre de changement d'états associés à l'opérateur OPi, moins un.

A chaque fois que l'unité centrale ou le processeur identifie un début d'instruction, il vérifie la cohérence du registre spécifique R de l'invention avec la clé initiale INi associée à l'opérateur correspondant et stockée dans la table 1. En pratique, le processeur sait qu'il s'agit d'une nouvelle instruction par un signal de chargement d'instruction qu'il reçoit. Si la valeur contenue dans le registre de clé correspond à la clé INi associée à l'opérateur, on passe à l'étape suivante de l'instruction qui, sauf si SAi=0, correspond à l'exploitation d'un opérande.

En fin d'une instruction courante, l'unité centrale compare le contenu du registre R à la clé finale FIi associée à l'opérateur concerné. En cas de cohérence entre les deux valeurs, on poursuit l'exécution du programme en passant à l'instruction suivante. Dans le cas contraire, on exécute une fonction d'erreur, par exemple un arrêt du programme.

La fonction de dégradation la plus simple est l'incrément de un, c'est-à-dire ajouter la valeur 1 à chaque contenu successif du registre R. N'importe quelle autre fonction de dégradation peut être envisagée, comme on le verra par la suite.

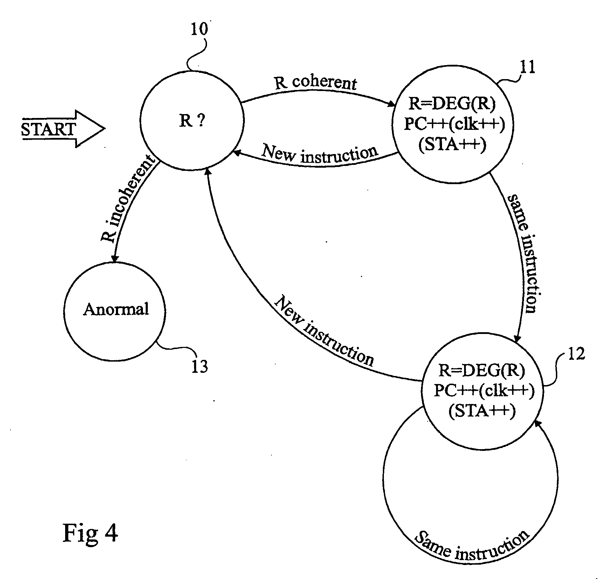

La figure 4 représente un diagramme d'états d'un mode de mise en oeuvre de la présente invention. Au début (START) de l'exécution du programme, on vérifie optionnellement la cohérence (état 10) du contenu du registre R avec la clé initiale de l'opérateur concerné.

En cas d'identité (R cohérent), on applique la fonction DEG de dégradation au contenu du registre (état 11). Cela revient à remplacer le contenu du registre R par une valeur dégradée (R=DEG(R)). Puis, on incrémente le compteur programme (PC++) ou en variante l'horloge (CLK++) ou un compteur d'états (STA++), de façon à passer à l'étape suivante du programme.

Si cette étape correspond à un état intermédiaire de l'instruction, c'est-à-dire que l'on reste dans la même instruction (Same instruction) du programme, on réapplique la fonction de dégradation (état 12) à la valeur contenue dans le registre R, et on incrémente de nouveau, par exemple, le compteur programme (état 12). Tant que l'on reste dans la même instruction, on boucle sur cet état 12 à chaque incrément du compteur programme (en variante, de l'horloge ou du compteur d'états).

Quand on arrive à la fin de l'instruction, on vérifie la cohérence du contenu du registre R (état 10) par rapport à la clé finale FIi de l'instruction correspondante. Si le contenu du registre R correspond bien à l'état final FIi, cela signifie que l'instruction s'est exécutée normalement (sans déroutement). En cas d'incohérence entre le contenu du registre R et la clé initiale ou finale de l'opérateur courant, on exécute un traitement spécifique d'erreur (état 13, Anormal).

Puis, s'il reste des instructions INSTj dans le programme, on réinitialise le registre R avec la clé initiale de la nouvelle instruction.

A chaque nouvelle instruction (New Instruction), on charge le registre R avec la valeur du code initial INi de l'opérateur OPi stocké dans la mémoire (table 1, figure 1). La valeur initiale chargée est ensuite dégradée au fur et à mesure de l'exécution de l'instruction jusqu'à atteindre, normalement, la valeur finale FIi.

Dans le cas où une tentative de déroutement se produit, qu'il s'agisse d'une tentative accidentelle ou volontaire, le compteur programme se trouve modifié. Par conséquent, l'instruction exécutée va soit s'arrêter si le déroutement conduit à la première étape d'une nouvelle instruction, soit se poursuive sur la base d'un autre opérande.

Dans le premier cas, l'examen du contenu du registre correspondant à une fin d'instruction ne donne pas la valeur attendue. Dans le deuxième cas, le traitement se poursuit en appliquant la fonction de dégradation au nombre de cycles (ou d'états) restant jusqu'à atteindre la fin de l'instruction. Toutefois, le nombre de dégradations réellement appliquées à la clé initiale ne correspond pas au nombre associé à l'opérateur. Par conséquent, la clé finale sera différente de celle attendue.

De préférence, le nombre d'états incohérents produits par la fonction de dégradation est fonction de la durée des instructions. En supposant un jeu de N instructions, on a 2*N clés cohérentes. En notant AVG la durée moyenne en nombre de cycles d'une instruction, le nombre de clés incohérentes est égal à AVG*N. Le même raisonnement peut s'appliquer au nombre d'états de l'automate d'états si l'invention se base sur ses changements d'états.

La fiabilité du système dépend notamment de la distance (écart) entre les clés, qu'elles soient cohérentes ou incohérentes, de chaque opérateur. En fait, il faut que la clé incohérente finale d'un opérateur donné soit le plus éloignée possible de la première clé cohérente d'un autre opérateur.

La sécurité du système repose donc sur le fait que si le processeur est dérouté en cours de traitement d'une instruction (qu'il soit dans un état cohérent ou non à ce moment là), il ne puisse jamais retomber sur une clé cohérente. Pour cela, les conditions suivantes doivent, de préférence, être respectées.

Tout d'abord, les clés d'un opérateur OPi donné doivent être uniques. Deux instructions de types différents ne partageront donc jamais une même clé qu'elle soit cohérente ou incohérente. De plus, selon un mode de mise en oeuvre préféré, pour empêcher un passage d'un état final quelconque à un état initial quelconque d'une opération, il faut que chaque couple de clés initiale et finale soit séparé d'un nombre minimum d'applications de la fonction de dégradation, fonction du nombre de cycles nécessaires entre les deux états. Cette condition est une condition minimale. En effet, on peut utiliser une fonction de dégradation et des codes construits de telle manière que l'on ne puisse jamais passer d'un code à un autre par l'application de la fonction de dégradation.

Selon un mode de réalisation préféré, la taille du registre R contenant la clé dépend de la fonction de dégradation DEG. Plus précisément, on ne doit pas pouvoir passer de l'état final FIN du dernier opérateur OPN à l'état initial IN1 du premier opérateur OP1, par application de la fonction de dégradation, en profitant d'un débordement de registre. Par conséquent, on fera en sorte que l'état final FIN du dernier opérateur OPN (sous réserve que celui-ci corresponde à la clé la plus grande) soit également séparé par au moins le nombre moyen de cycles AVG, du contenu maximal du registre.

Un avantage de la présente invention est qu'elle garantit la détection d'un déroutement d'un programme, qu'il soit accidentel ou volontaire.

Un autre avantage de la présente invention est que sa mise en oeuvre est compatible avec n'importe quel jeu d'instructions.

Bien entendu, la présente invention est susceptible de diverses variantes et modifications qui apparaîtront à l'homme de l'art. En particulier, on pourra choisir n'importe quelle fonction de dégradation pourvu qu'elle respecte les conditions fonctionnelles indiquées ci-dessus. Par exemple, on pourra se référer à l'ouvrage "The Theory of Error Correcting Codes" de F.J. Macwilliams et N.J.A. Sloane, publié en 1977, par ELSEVIER SCIENCE PUBLISHER BV dans la collection North-Holland Mathematical Library, pour choisir une fonction de dégradation. A titre d'exemple particulier, on choisira une fonction respectant, entre deux états, une distance dite de Hamming qui respecte l'ensemble des fonctionnalités indiquées ci-dessus.

De plus, la mise en oeuvre pratique de l'invention est la portée de l'homme du métier à partir des indications fonctionnelles données ci-dessus. En effet, ces indications suffisent à la programmation des étapes nécessaires à l'exécution des contrôles prévus. En outre, pour la réalisation sous la forme d'une machine d'états en logique câblée, la transposition est également à la portée de l'homme du métier.

## Revendications

1. Procédé de contrôle de l'exécution d'un programme mettant en oeuvre M instructions (INSTj) comprenant chacune au moins l'exécution d'un opérateur (OPi) choisi parmi un ensemble de N opérateurs, comprenant les étapes suivante :
associer, à chaque opérateur, un code numérique initial (INi) et un code numérique final (FIi) qui sont liés l'un à l'autre par une fonction de dégradation (DEG) appliquée, en l'absence de déroutement, un nombre de fois (kᵢ-1) dépendant de l'exécution de cet opérateur ;
appliquer, au contenu d'un registre (R) initialisé à chaque début d'instruction par le code initial de l'opérateur correspondant, ladite fonction de dégradation un nombre de fois fonction de l'exécution de l'opérateur ; et
vérifier, au moins à chaque fin d'instruction, la cohérence entre le contenu du registre et le code final de l'opérateur correspondant, **caractérisé en ce que** les codes initiaux (INi) et finaux (FIi) associés à chaque opérateur (OPi) sont choisis de telle sorte que deux instructions (INSTj) exécutant des opérateurs différents ne partagent jamais un même code, que ce soit en état initial ou final ou en étant intermédiaire par application de la fonction de dégradation (DEG).

2. Procédé selon la revendication 1, **caractérisé en ce que** les codes initiaux (INi) et finaux (FIi) des opérateurs (OPi) sont stockés dans une mémoire (1) non volatile à lecture seulement.

3. Procédé selon la revendication 2, comprenant, à chaque exécution d'une instruction (INSTj) du programme, les étapes suivantes :
lire le code initial (INi) associé à l'opérateur (OPi) de l'instruction dans ladite mémoire (1) ;
stocker ce code initial dans ledit registre (R) ;
appliquer ladite fonction de dégradation (DEG) au contenu dudit registre un nombre de fois fonction du type d'instruction ; et
en fin d'instruction :
lire le code final (FIi) associé à l'opérateur de l'instruction dans ladite mémoire (1) ; et
vérifier la cohérence entre le contenu du registre et ce code final.

4. Procédé selon l'une quelconque des revendications 1 à 3, dans lequel le nombre d'applications de la fonction de dégradation (DEG) dépend du nombre de cycles temporels (ki) nécessaires à l'exécution de l'instruction (INSTj).

5. Procédé selon l'une quelconque des revendications 1 à 3, dans lequel le nombre d'applications de la fonction de dégradation (DEG) dépend du nombre de changement d'états (STA) d'un automate d'états lors de l'exécution de l'instruction.

6. Procédé selon l'une quelconque des revendications 1 à 5, dans lequel la fonction de dégradation (DEG) est choisie pour que chaque état soit séparée de l'état suivant par une distance de Hamming.

7. Procédé selon l'une quelconque des revendications 1 à 6, dans lequel la détection d'un code courant contenu dans le registre (R), différent d'une clé initiale ou finale, provoque un traitement d'anomalie spécifique.

8. Processeur d'exécution d'un programme associé à un registre (R) de stockage d'une clé binaire courante de contrôle de l'exécution du programme par application du procédé selon l'une quelconque des revendications 1 à 7.

## Claims

1. A method for controlling the execution of a program implementing M instructions (INSTj), each comprising at least the execution of an operator (OPi) selected from a set of N operators, comprising the following steps:
associating with each operator an initial digital code (INi) and a final digital code (FIi) which are linked to each other by a degradation function (DEG) applied, in the absence of a branch a number of times (kᵢ-1) depending on the execution of the operator;
applying, to the content of a register (R) initialized at each instruction beginning by the initial code of the corresponding operator, said degradation function a number of times depending on the operator execution; and
checking, at least at each instruction end, the coherence between the register content and the final code of the corresponding operator,
**characterized in that** the initial (INi) and final (FIi) codes associated with each operator (OPi) are chosen so that two instructions (INSTj) executing different operators never share a same code, be it at the initial or final state or at an intermediary state by application of the degradation function (DEG).

2. The method of claim 1, wherein the initial (INi) and final (FIi) codes of the operators (OPi) are stored in a read-only non-volatile memory (1).

3. The method of claim 2, comprising upon each execution of a program instruction (INSTj), the following steps:
reading the initial code (INi) associated with the operator (OPi) of the instruction from said memory (1);
storing this initial code in said register (R);
applying said degradation function (DEG) to the content of said register a number of times depending on the instruction type; and
at the end of an instruction:
reading the final code (FIi) associated with the operator of the instruction from said memory (1); and
checking the coherence between the register content and this final code.

4. The method of any of claims 1 to 3, wherein the number of applications of the degradation function (DEG) depends on the number of time cycles (ki) necessary to execute the instruction (INSTj).

5. The method of any of claims 1 to 3, wherein the number of applications of the degradation function (DEG) depends on the number of state switchings (STA) of a state machine upon execution of the instruction.

6. The method of any of claims 1 to 5, wherein the degradation function (DEG) is chosen so that each state is separated from the next state by a Hamming distance.

7. The method of any of claims 1 to 6, wherein the detection of a current code contained in the register (R), different from an initial or final key, causes a specific anomaly processing.

8. A processor for executing a program, associated with a register (R) for storing a current binary key for controlling the program execution by application of the method of any of claims 1 to 7.

## Patentansprüche

1. Verfahren zum Steuern der Durchführung eines Programms, das M Instruktionen (INSTj) implementiert, die jeweils wenigstens die Durchführung eines Operators (OPi) aufweist, ausgewählt aus einem Satz von N Operatoren, wobei das Verfahren die folgenden Schritte aufweist:
Assoziieren mit jedem Operator eines anfänglichen Digitalcodes (INi) und eines schlussendlichen Digitalcodes (Fli), die durch eine Degradationsfunktion (DEG) miteinander verbunden sind, die in der Abwesenheit eines Zweigs einer Anzahl von Malen (kᵢ-1) angelegt wird, und zwar in Abhängigkeit von der Durchführung des Operators;
Anlegen an den Inhalt eines Registers (R), der bei jeder Instruktion initialisiert wird, beginnend mit dem Initialcode des entsprechenden des Operators, der Degradationsfunktion, und zwar eine Anzahl von Malen in Abhängigkeit von der Operatordurchführung; und
Überprüfen wenigstens bei jedem Instruktionsende der Kohärenz zwischen dem Registerinhalt und dem schlussendlichen Code des entsprechenden Operators, **dadurch gekennzeichnet, dass** der anfängliche (INi) und der schlussendliche (Fli) Code, der mit jedem Operator (OPi) assoziiert ist, ausgewählt wird, so dass zwei Instruktionen (INSTj), die unterschiedliche Operatoren durchführen, niemals denselben Code teilen, und zwar weder im Anfangs- noch im schlussendlichen Zustand oder bei einem Zwischenzustand durch Anlegen der Degradationsfunktion (DEG).

2. Verfahren nach Anspruch 1, wobei die anfänglichen (INi) und die schlussendlichen (Fli) Codes der Operatoren (OPi) in einem nichtflüchtigen Nur-Lese-Speicher (1) gespeichert sind.

3. Verfahren nach Anspruch 2, das nach jeder Durchführung einer Programminstruktion (INSTj) die folgenden Schritte aufweist:
Lesen des Anfangscodes (INi) der mit dem Operator (OPi) der Instruktion assoziiert ist, und zwar aus dem Speicher (1);
Speichern dieses Anfangscodes in dem Register (R);
Anlegen der Degradationsfunktion (DEG) an den Inhalt des Registers für eine Anzahl von Malen abhängig von dem Instruktionstyp; und an dem Ende einer Instruktion:
Lesen des schlussendlichen Codes (Fli) der mit dem Operator der Instruktion assoziiert ist, und zwar aus dem Speicher (1); und
Überprüfen der Kohärenz zwischen dem Registerinhalt und diesem schlussendlichen Code.

4. Verfahren nach einem der Ansprüche 1 bis 3, wobei die Anzahl von Anwendungen der Degradationsfunktion (DEG) abhängt von der Anzahl von Zeitzyklen (kᵢ), die notwendig sind zum Durchführen der Instruktion (INSTj).

5. Verfahren nach einem der Ansprüche 1 bis 3, wobei die Anzahl von Anwendungen der Degradationsfunktion (DEG) abhängt von der Anzahl von Zustandsschaltungen (STA) einer Zustandsmaschine beim Durchführen der Instruktion.

6. Verfahren nach einem der Ansprüche 1 bis 5, wobei die Degradationsfunktion (DEG) so ausgewählt ist, dass jeder Zustand von dem nächsten Zustand durch eine Hamming-Distanz separiert ist.

7. Verfahren nach einem der Ansprüche 1 bis 6, wobei die Detektion eines derzeitigen Codes, der in dem Register (R) enthalten ist, der unterschiedlich von einem anfänglichen oder schlussendlichen Schlüssel ist, eine spezifische anomale Verarbeitung bewirkt.

8. Prozessor zum Durchführen eines Programms, das mit einem Register (R) assoziiert ist zum Speichern eines derzeitigen Binärschlüssels zum Steuern der Programmdurchführung durch Anwenden des Verfahrens nach einem der Ansprüche 1 bis 7.
